# EUROPÄISCHE PATENTANMELDUNG

(11) **EP 1 914 034 A1**
(43) Veröffentlichungstag der Anmeldung: **23.04.2008**
(21) Anmeldenummer: 07118271.1
(22) Anmeldetag: 11.10.2007
(51) Int. Cl.: B23K 11/31, B23K 11/28

(54) **Schweißzange zum Elektro-Punktschweißen**

(30) Priorität: 18.10.2006 DE 202006015957 U
(71) Anmelder: Nimak GmbH, 57537 Wissen (DE)
(72) Erfinder: Nickel, Paul, 57537 Wissen (DE)
(74) Vertreter: Patentanwälte Dr. Solf & Zapf

(57) **Zusammenfassung**

Die vorliegende Erfindung betrifft eine Schweißzange (1) zum Elektro-Punktschweißen, mit einer Basiseinheit (2), die über einen Trägerkranz (8) im Raum aufhängbar und in dem Trägerkranz (8) um eine Drehachse (14) verdrehbar gelagert ist. Zum Blockieren oder Freigeben der Verdrehung der Basiseinheit (2) relativ zu dem Trägerkranz (8) sind Blockiermittel (20) vorgesehen, welche über ein im Bereich eines Handgriffes (22) der Basiseinheit (2) angeordnetes Betätigungselement (26) steuerbar sind.

## Beschreibung

Die vorliegende Erfindung betrifft eine Schweißzange zum Elektro-Punktschweißen, mit einer Basiseinheit, die über einen Trägerkranz im Raum aufhängbar und in dem Trägerkranz um eine Drehachse verdrehbar gelagert ist, wobei Blockiermittel zum Blockieren oder Freigeben der Verdrehung der Basiseinheit relativ zu dem Trägerkranz vorgesehen sind.

Derartige Schweißzangen werden in vielen Bereichen der Herstellungstechnik, insbesondere im Automobilbau, dazu verwendet, metallische Bauteile durch elektrisches Punktschweißen (Widerstandschweißen) zu verbinden. Dazu weist die Basiseinheit zangenartige Elektrodenarme auf, die an ihren freien Enden Schweißelektroden tragen, die für den jeweiligen Punktschweißvorgang unter Zwischenlage der zu verschweißenden Bauteile, insbesondere Metallbleche, zusammengeführt und mit einer Anpresskraft beaufschlagt werden. Hierbei wird ein elektrischer Schweißstrom über die Elektrodenarme und die Elektroden durch die Bauteile geführt, die dadurch erhitzt und stoffflüssig verbunden werden. Häufig werden handgeführte Schweißzangen eingesetzt, die über einen Trägerkranz kardanisch im Raum aufgehängt werden, so dass sie bezüglich ihrer Raumorientierung nahezu beliebig beweglich sind. Die relative Verdrehung der gesamten Basiseinheit innerhalb des Trägerkranzes um die von dem Trägerkranz definierte Drehachse ist für den jeweiligen Schweißvorgang blockierbar. Bisher war als Blockiermittel im Verbindungsbereich zwischen dem Trägerkranz und einem darin drehbar gelagerten Drehträger (Drehkranz) der Basiseinheit eine Klemmeinrichtung mit einem manuell zu betätigenden Klemmhebel angeordnet. Dies macht nachteiligerweise eine sehr umständliche Zweihandbetätigung erforderlich, indem mit nur einer Hand die Schweißzange in der gewünschten Ausrichtung gehalten und mit der anderen Hand der Klemmhebel betätigt werden muss.

Der vorliegenden Erfindung liegt die Aufgabe zugrunde, eine Schweißzange der beschriebenen Art so zu verbessern, dass sie bei der Verwendung einfacher und komfortabler handhabbar ist.

Erfindungsgemäß wird dies dadurch erreicht, dass die Blockiermittel über ein im Bereich eines Handgriffes der Basiseinheit angeordnetes Betätigungselement fernsteuerbar sind. Dazu sind die Blockiermittel mechanisch, über ein pneumatisches oder hydraulisches Druckmittel, elektromotorisch und/oder elektromagnetisch betätigbar, um sie über das Betätigungselement zwischen einem Blockierzustand und einem Freigabezustand umzuschalten. Indem das Betätigungselement im Bereich des Handgriffes, insbesondere unmittelbar an dem Handgriff, angeordnet ist, kann der Anwender vorteilhafterweise die Hand am Handgriff belassen, so dass beide Hände zum Manipulieren und Ausrichten der Schweißzange zur Verfügung stehen; das Blockieren oder Freigeben der Blockiermittel erfolgt automatisch über die Fernbetätigung mittels des Betätigungselementes.

Weitere vorteilhafte Ausgestaltungsmerkmale und besondere Ausführungsformen der Erfindung sind in den abhängigen Ansprüchen sowie der folgenden Beschreibung enthalten.

Anhand von mehreren in der Zeichnung veranschaulichten, bevorzugten Ausführungsbeispielen soll die Erfindung genauer erläutert werden. Dabei zeigen:
- Fig. 1: eine Perspektivansicht einer erfindungsgemäßen Schweißzange mit nur teilweise dargestellten Elektrodenarmen,
- Fig. 2: eine Perspektivansicht (Pfeil II in Fig. 1) auf gesonderte Bestandteile, und zwar auf einen in einem Trägerkranz gelagerten Drehträger mit erfindungsgemäßen Blockiermitteln in einer ersten Ausführungsform,
- Fig. 3: eine Seitenansicht auf die Anordnung in Pfeilrichtung III gemäß Fig. 2,
- Fig. 4: eine Draufsicht in Pfeilrichtung IV gemäß Fig. 3,
- Fig. 5: einen vergrößerten Schnitt in der Ebene V - V gemäß Fig. 4,
- Fig.6: eine vergrößerte Teil-Perspektivansicht auf den Bereich der Blockiermittel in der Ausführung gemäß Fig. 2 bis 5,
- Fig. 7: eine Perspektivansicht ähnlich Fig. 2 in einer Ausführungsvariante der Blockiermittel,
- Fig. 8: eine weitere Perspektivansicht zur Ausführung nach Fig. 7 aus einer Blickrichtung auf die andere, axial gegenüberliegende Seite von Trägerkranz und Drehträger,
- Fig. 9: eine gesonderte Perspektivdarstellung der wesentlichen Bestandteile der Blockiermittel in der Ausführung gemäß Fig. 7 und 8,
- Fig. 10: eine weitere alternative Ausführungsform der erfindungsgemäßen Blockiermittel in einer Darstellung ähnlich Fig. 7,
- Fig. 11: eine gesonderte Darstellung von wesentlichen Teilen der Blockiermittel nach Fig. 10,
- Fig. 12: eine weitere Alternative der Blockiermittel in einer Darstellung ähnlich Fig. 1, jedoch durch Weglassung unwesentlicher Teile vereinfacht, und
- Fig. 13: eine Ausführungsvariante zu Fig. 12.

In den verschiedenen Figuren der Zeichnung sind gleiche Teile stets mit den gleichen Bezugszeichen versehen und werden daher in der Regel jeweils nur einmal beschrieben.

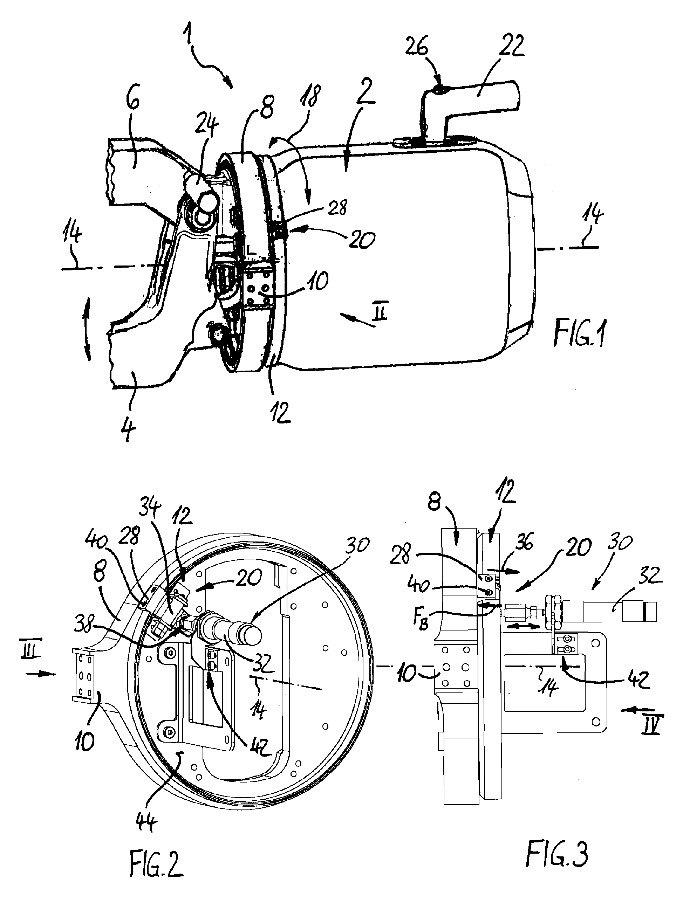

In Fig. 1 ist beispielhaft eine Schweißzange 1 in einer Ausführung als Handschweißzange, d. h. handgeführte Schweißzange insbesondere für den Automobilbau, dargestellt. Die Schweißzange 1 besteht aus einer Basiseinheit 2 mit einer nur teilweise angedeuteten Elektrodenarm-Anordnung mit zwei Elektrodenarmen 4 und 6. Die Basiseinheit 2 enthält bestimmte, nicht näher dargestellte Bauteile zur Halterung der Elektrodenarme 4, 6, zum Antrieb zumindest eines der beiden Elektrodenarme 4, 6 sowie eine Einrichtung zur Versorgung von nicht dargestellten Schweißelektroden der Elektrodenarme 4, 6 mit einem elektrischen Schweißstrom.

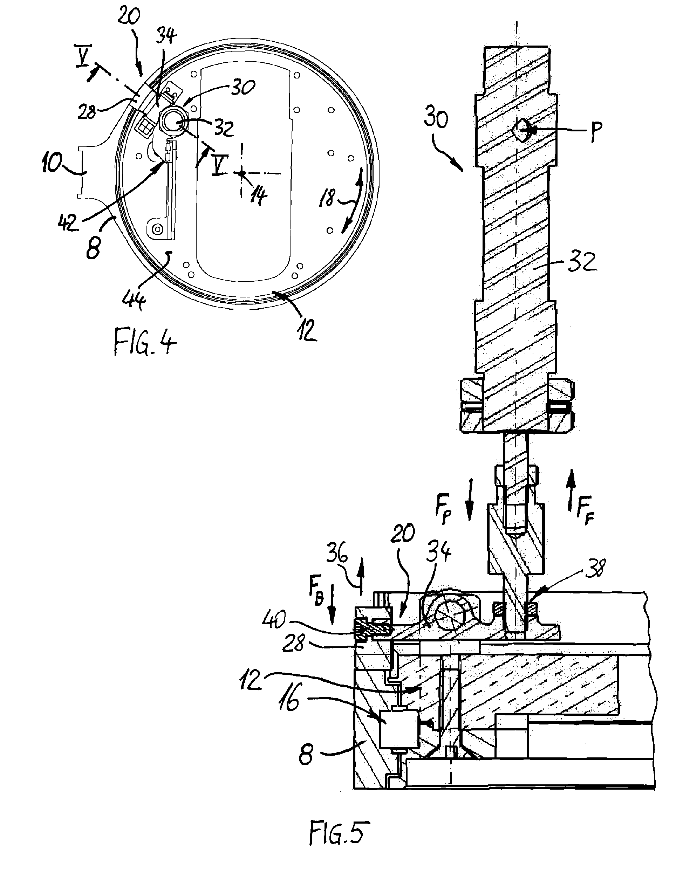

Die gesamte Basiseinheit 2 einschließlich der Elektrodenarme 4, 6 ist über einen Trägerkranz 8 und über eine nicht dargestellte Aufhängung so in einem Raum aufhängbar, dass sie kardanisch beweglich ist. Der Trägerkranz 8 weist an einer Stelle seines Umfangs einen radial nach außen vorstehenden Verbindungsansatz 10 zum Befestigen an der Aufhängung auf. Die Basiseinheit 2 ist über einen Drehträger 12 in dem Trägerkranz 8 um eine von diesem definierte Drehachse 14 verdrehbar gelagert. Wie sich aus Fig. 5 ergibt, ist dazu in einem Spalt zwischen dem Trägerkranz 8 und dem Drehträger 12 ein aus Wälzkörpern bestehendes Drehlager 16 angeordnet. Die relative Verdrehbarkeit der Basiseinheit 2 innerhalb des Trägerkranzes 8 ist in Fig. 1, 4 und 6 durch einen Doppelpfeil 18 angedeutet. Zum Blockieren oder Freigeben dieser Verdrehung der Basiseinheit 2 relativ zu dem Trägerkranz 8 sind Blockiermittel 20 vorgesehen. Zur Handhabung der Schweißzange 1 weist die Basiseinheit 2 in ihrem oberen Bereich einen z. B. pistolenartigen Handgriff 22 auf. Vorzugsweise ist noch ein zweiter Handgriff 24 im hinteren, an die Basiseinheit 2 angrenzenden Bereich der Elektrodenarme 4, 6 angeordnet. Mittels der Handgriffe 22, 24 läßt sich die kardanisch im Raum aufgehängte Schweißzange 1 gut manipulieren und beliebig ausrichten. Dadurch können die Schweißarme 4, 6 bzw. deren Schweißelektroden optimal relativ zu den zu verschweißenden Bauteilen positioniert werden.

Erfindungsgemäß sind nun die Blockiermittel 20 über ein im Bereich eines der Handgriffe, insbesondere des Handgriffes 22 der Basiseinheit 2, angeordnetes Betätigungselement 26 (nur in Fig. 1 dargestellt) fernsteuerbar. Die Blockiermittel 20 sind dazu derart ausgebildet, dass sie mittels des Betätigungselementes 26 zwischen einem Blockierzustand und einem Freigabezustand umschaltbar sind. Dazu können die Blockiermittel 20 im Grunde beliebig, beispielsweise mechanisch, über ein pneumatisches oder hydraulisches Druckmittel, elektromotorisch und/oder elektromagnetisch betätigbar sein. Das Betätigungselement 26 kann vorteilhafterweise als manuell mit einem Finger oder Daumen druckbetätigbare Drucktaste ausgebildet und an einer ergonomisch griffgünstigen Stelle an dem Handgriff 22 angeordnet sein. Je nach Ausgestaltung der Blockiermittel 20 kann es sich bei dem Betätigungselement 26 um einen elektrischen Drucktaster, um ein Druckmittelventil oder um ein mechanisches Stellglied handeln.

In den in Fig. 1 bis 6 sowie auch in Fig. 7 bis 9 dargestellten Ausführungsformen der Erfindung sind die Blockiermittel 20 als Bremseinrichtung ausgebildet. Bei der ersten Ausführung (Fig. 1 bis 6) ist an dem in dem Trägerkranz 8 drehbar gelagerten Drehträger 12 der Basiseinheit 2 ein Bremselement 28 gelagert. Dieses Bremselement 28 wirkt in der Blockierstellung kraftschlüssig (reibschlüssig) gegen den Trägerkranz 8 und wird in der Freigabestellung von dem Trägerkranz 8 gelöst. Für diese Betätigung des Bremselementes 28 ist ein motorisches Antriebsglied 30 vorgesehen, welches über nicht dargestellte Steuerleitungen mit dem Betätigungselement 26 am Handgriff 22 verbunden ist. Je nach Art des Antriebsgliedes 30 kann es sich bei den Steuerleitungen um elektrische Leitungen oder um Druckmittelleitungen handeln.

Im Ausführungsbeispiel gemäß Fig. 1 bis 6 ist als Antriebsglied 30 ein Druckmittelzylinder 32 vorgesehen, der parallel zur Drehachse 14 angeordnet ist und vorzugsweise über eine Betätigungswippe 34 mit dem Bremselement 28 verbunden ist. Wie sich insbesondere aus Fig. 5 ergibt, ist die Betätigungswippe 34 derart schwenkbar an dem Drehträger 12 gelagert, dass durch eine in Zugrichtung des Zylinders 32 wirkende Federkraft F_{F} das Bremselement 28 mit einer Bremskraft F_{B} axial gegen eine Stirnringfläche des Trägerkranzes 8 gepresst wird. Zum Lösen des Bremselementes 28 wird der Zylinder 32 mit einem insbesondere pneumatischen Druckmittel, d. h. mit einem Druck p, so beaufschlagt, dass die Betätigungswippe 34 mit einer der Federkraft F_{F} entgegengerichteten Druckkraft F_{P} beaufschlagt und dadurch das Bremselement 28 in Pfeilrichtung 36 von dem Trägerkranz 8 gelöst wird. Dadurch wird der Drehträger 12 mit der Basiseinheit 2 für eine Verdrehung relativ zu dem Trägerkranz 8 freigegeben.

Vorzugsweise sind der Blockierzustand und der Freigabezustand jeweils stabil. Dies bedeutet, dass eine kurze Druckbetätigung des Betätigungselementes 26 jeweils eine Umschaltung des Bremselementes 28 vom Blockierzustand zum Freigabezustand oder umgekehrt vom Freigabezustand zum Blockierzustand bewirkt.

Es ist vorteilhaft, wenn der Druckmittel-Zylinder 32 bzw. ein freies Ende seiner Kolbenstange über ein Gelenk 38 mit der Betätigungswippe 34 verbunden ist, wodurch ein Ausgleich zwischen der Linearbewegung der Kolbenstange und der Schwenkbewegung der Betätigungswippe 34 erreicht wird.

Gemäß Fig. 5 ist es ferner vorteilhaft, dass das Bremselement 28 als eine Art Bremsschuh über Schrauben 40 lösbar und dadurch auswechselbar an der Betätigungswippe 34 befestigt ist.

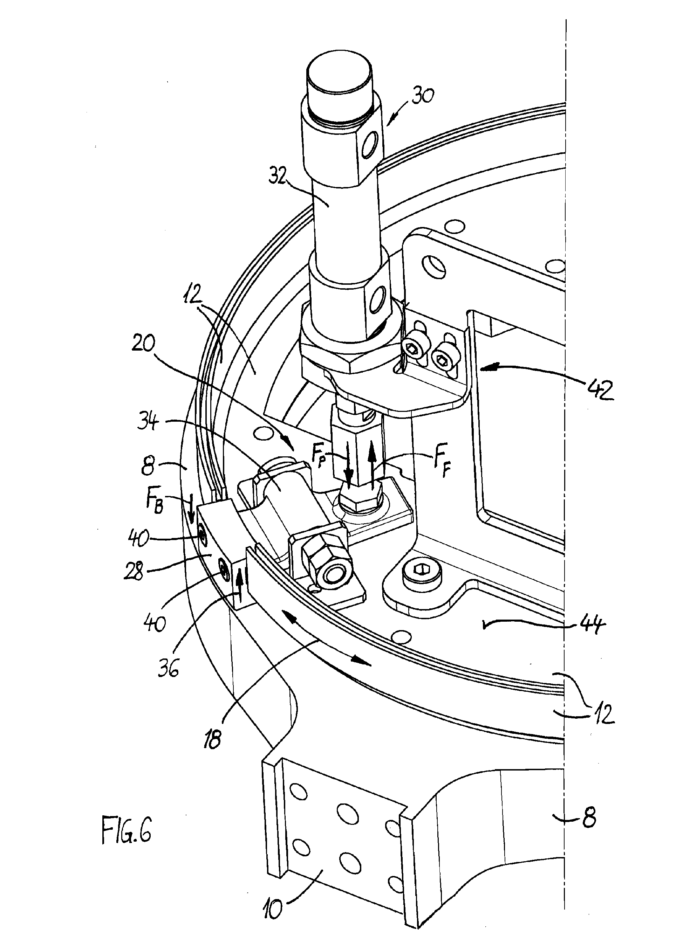

Der Vollständigkeit halber sei noch bemerkt, dass das Antriebselement 30 bzw. der Zylinder 32 über geeignete Haltemittel 42 (siehe insbesondere Fig. 2 und 6) an einem inneren, senkrecht zur Drehachse 14 angeordneten Plattenabschnitt 44 des Drehträgers 12 so befestigt ist, dass eine Positionsverstellung zwecks Justierung der Blockier- und Lösezustände des Bremselementes 28 möglich ist. Weiterhin wird die den Blockierzustand bewirkende Federkraft F_{F} durch ein Federelement erzeugt, welches gemäß Fig. 1 bis 6 innerhalb des Druckmittelzylinders 32 angeordnet sein kann und deshalb in der Zeichnung nicht sichtbar ist. Alternativ ist es aber ebenfalls möglich, nicht nur den Freigabezustand, sondern auch den Blockierzustand durch entsprechende Druckmittelbeaufschlagung des - dann doppelt wirkenden - Zylinders 32 zu bewirken.

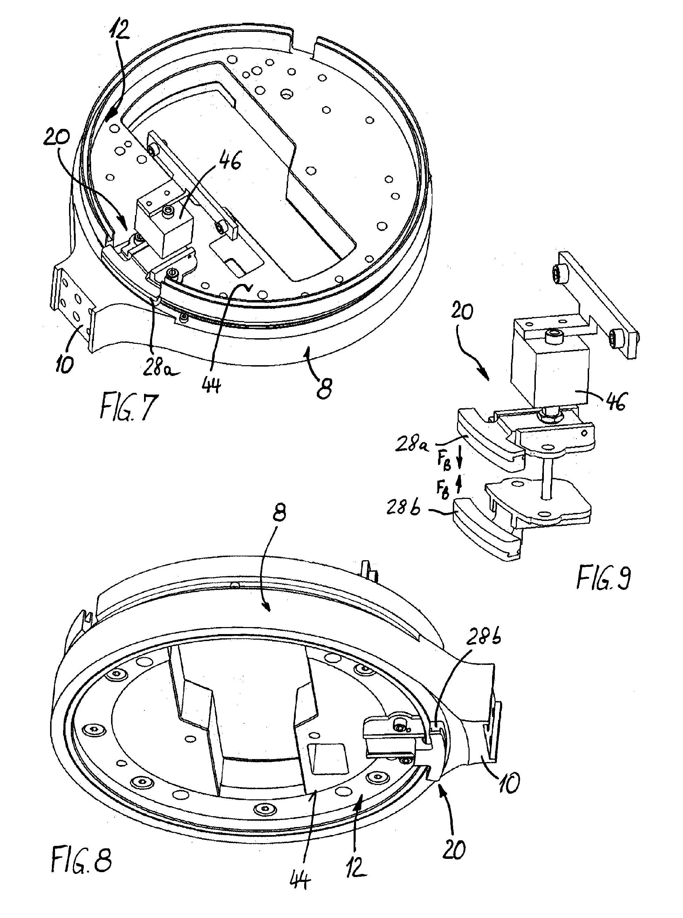

Was nun die Ausführungsvariante gemäß Fig. 7 bis 9 betrifft, so besteht dabei die kraft- bzw. reibschlüssig wirkende Bremseinrichtung aus zwei Bremselementen 28a und 28b, die - nach Art einer Fahrrad-Felgenbremse oder einer Kfz-Scheibenbremse - auf zwei axial gegenüberliegenden Seiten gegen den Trägerkranz 8 wirken. Im Blockierzustand wird somit der Trägerkranz 8 zwischen den Bremselementen 28a, 28b kraftschlüssig klemmend festgehalten, so dass die relative Verdrehung des Drehträgers 12 mit der Basiseinheit 2 blockiert ist. Zur Betätigung der Bremselemente 28a, 28b ist gemäß Fig. 9 ein geeignetes Betätigungsglied 46 vorgesehen, welches im Blockierzustand die beiden Bremselemente 28a, 28b jeweils mit einer gegeneinander und gegen den Trägerkranz 8 gerichteten Bremskraft F_{B} beaufschlagt. Somit handelt es sich bei dieser Ausführung um eine doppelt wirkende Bremseinrichtung.

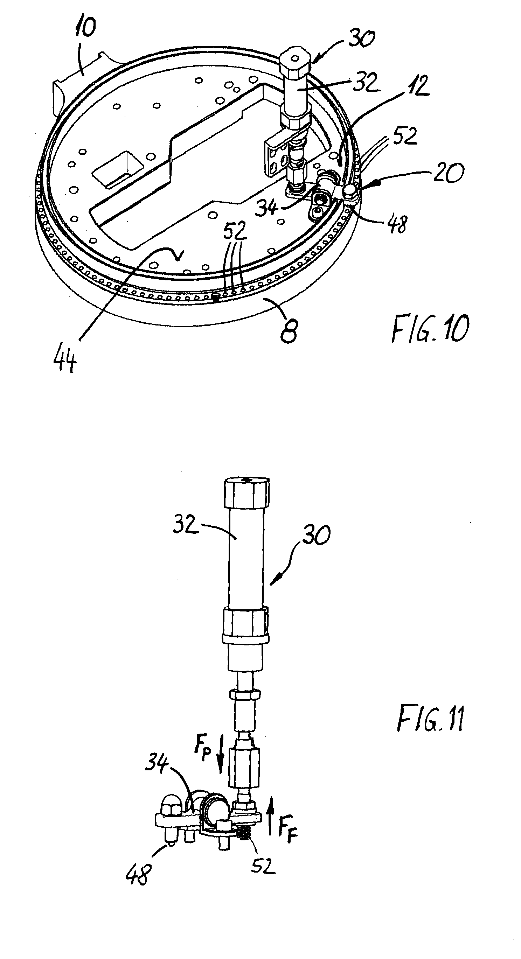

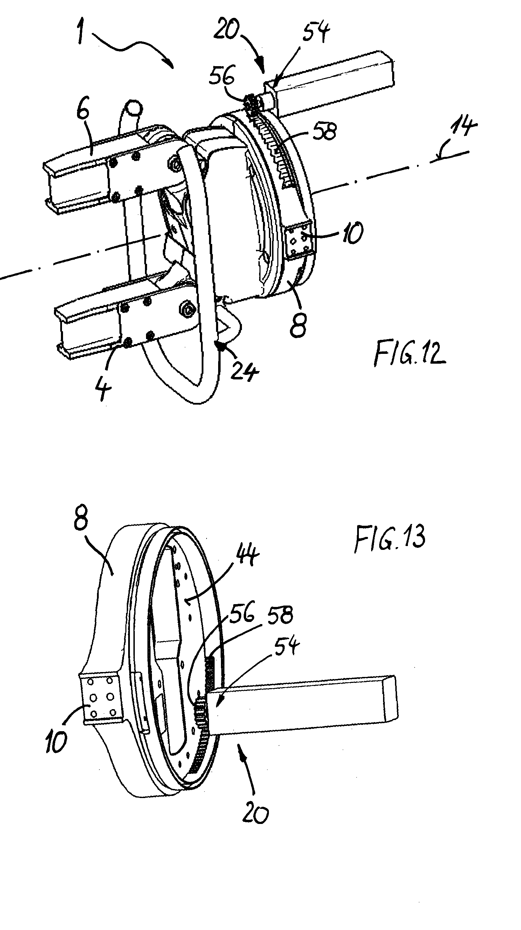

In der Ausführungsform gemäß Fig. 10 und 11 sind die Blockiermittel 20 als eine formschlüssig wirkende Sperreinrichtung ausgebildet. Diese Sperreinrichtung weist in der dargestellten Ausführung ein z. B. stiftartiges Sperrelement 48 auf (s. dazu Fig. 11), welches vorzugsweise an dem Drehträger 12 der Basiseinheit 2 gelagert ist. Im Blockierzustand wirkt das Sperrelement 48 formschlüssig mit jeweils einer von mehreren, in Umfangsrichtung verteilt angeordneten Blockierstellen 50 des Trägerkranzes 8 zusammen. Wie dargestellt können die Blockierstellen 50 als Lochöffnungen oder Vertiefungen ausgebildet sein. Da es sich um eine stufige Blockierung handelt, sollten die Blockierstellen 50 möglichst eng beieinander liegen, um eine "quasi-stufenlose" Blockierung zu erreichen. Wie sich aus Fig. 11 ergibt, wird das Sperrelement 48 auf ähnliche Weise betätigt, wie es bei der Ausführung mit dem Bremselement 28 gemäß Fig. 1 bis 6 der Fall ist. Dazu sind gleiche Teile mit den gleichen Bezugszeichen versehen, so dass auf die obige Beschreibung verwiesen werden kann. Zusätzlich kann gemäß Fig. 11 ein Federelement 52 zur Erzeugung der Federkraft F_{F} zwischen einem Schenkel der Betätigungswippe 34 und dem Drehträger 12 angeordnet sein.

Was schließlich noch die Ausführungen gemäß Fig. 12 und 13 betrifft, so sind dabei die Blockiermittel 20 von - insbesondere elektromotorischen - Antriebsmitteln 54 derart gebildet, dass in einem aktivierten Zustand der Antriebsmittel 54 die Basiseinheit 2 vorteilhafterweise motorisch relativ zu dem Trägerkranz 8 verdrehbar ist, während die Antriebsmittel 54 in einem deaktivierten Zustand die relative Verdrehung blockieren. Somit haben die Blockiermittel 20 bzw. die Antriebsmittel 54 bei dieser Ausführungsform eine Doppelfunktion ; sie dienen zusätzlich zum Blockieren der Verdrehung vorteilhafterweise auch zum Drehantrieb. Dadurch können bestimmte Drehwinkel z. B. elektronisch justiert und über die Antriebsmittel 54 angefahren werden. Ist die gewünschte Drehposition erreicht, bremsen die Antriebsmittel 54 die Bewegung ab und halten dann exakt die erforderliche Position. Damit wird die Qualität der Zangen-Positionierung und damit auch die Schweißpunktqualität entscheidend verbessert. Ein weiterer Vorteil besteht in der damit verbesserten Ergonomie durch einfaches Handling der Schweißzange 1. Die Bedienungsperson kann durch Knopfdruck (anstatt durch Muskelkraft) die jeweilige Drehwinkelposition steuern. In den dargestellten, bevorzugten Ausführungsformen bestehen die Antriebsmittel 54 aus einem motorisch antreibbaren Zahnrad 56 und einer korrespondierenden Verzahnung 58. Vorzugsweise ist der das Zahnrad 56 aufweisende Antrieb in der Basiseinheit 2, z. B. an dem Drehträger 12, befestigt, während die Verzahnung 58 zumindest in einem Teilbereich des Umfangs an dem Trägerkranz 8 angeordnet ist. In der ersten Variante gemäß Fig. 12 sind die Antriebsmittel 54 am äußeren Umfang des Trägerkranzes 8 vorgesehen, während in der Variante gemäß Fig. 13 der Antrieb in einem inneren Umfangsbereich erfolgt.

Im Übrigen liegen auch beliebige andere Ausführungen im Bereich der Erfindung. So können als Blockiermittel auch andere geeignete elektromotorische, elektromagnetische, hydraulische und/oder mechanische Elemente vorgesehen sein. Bei einer rein mechanischen Ausführung erfolgt die Betätigung mittels des Betätigungselementes 26 beispielsweise über einen Seilzug oder dergleichen mechanische Verbindung. Dabei können auch bestimmte mechanische Umlenkungen, wie z. B. über einen Kniehebel, vorgesehen sein. Insofern ist die Erfindung nicht auf das dargestellte, bevorzugte Ausführungsbeispiel und die erwähnten Varianten beschränkt, sondern umfasst auch alle im Sinne der Erfindung gleichwirkenden Ausführungen.

Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Schweißzange (1) zum Elektro-Punktschweißen, mit einer Basiseinheit (2), die über einen Trägerkranz (8) im Raum aufhängbar und in dem Trägerkranz (8) um eine Drehachse (14) verdrehbar gelagert ist, wobei Blockiermittel (20) zum Blockieren oder Freigeben der Verdrehung der Basiseinheit (2) relativ zu dem Trägerkranz (8) vorgesehen sind,
**dadurch gekennzeichnet, dass** die Blockiermittel (20) über ein im Bereich eines Handgriffes (22) der Basiseinheit (2) angeordnetes Betätigungselement (26) steuerbar sind.

2. Schweißzange nach Anspruch 1,
**dadurch gekennzeichnet, dass** das Betätigungselement (26) über Steuerleitungen mit den Blockiermitteln (20) verbunden ist, wobei die Blockiermittel (20) mittels des Betätigungselementes (26) zwischen einem Blockierzustand und einem Freigabezustand umschaltbar sind.

3. Schweißzange nach Anspruch 1 oder 2,
**dadurch gekennzeichnet, dass** die Blockiermittel (20) mechanisch, über ein pneumatisches oder hydraulisches Druckmittel, elektromotorisch und/oder elektromagnetisch betätigbar sind.

4. Schweißzange nach einem der Ansprüche 1 bis 3,
**dadurch gekennzeichnet, dass** das Betätigungselement (26) als Drucktaste an dem Handgriff (22) angeordnet ist.

5. Schweißzange nach einem der Ansprüche 1 bis 4,
**dadurch gekennzeichnet, dass** die Blockiermittel (20) als eine kraftschlüssig, d. h. mit Reibschluss wirkende Bremseinrichtung ausgebildet sind.

6. Schweißzange nach Anspruch 5,
**dadurch gekennzeichnet, dass** die Bremseinrichtung mindestens ein Bremselement (28, 28a, 28b) aufweist, das vorzugsweise an einem in dem Trägerkranz (8) drehbar gelagerten Drehträger (12) der Basiseinheit (2) gelagert ist und in dem Blockierzustand kraftschlüssig gegen den Trägerkranz (8) wirkt und in dem Freigabezustand von dem Trägerkranz (8) gelöst wird.

7. Schweißzange nach Anspruch 6,
**dadurch gekennzeichnet, dass** die Bremseinrichtung zwei Bremselemente (28a, 28b) aufweist, die - nach Art einer Felgen- oder Scheibenbremse - auf zwei axial gegenüberliegenden Seiten gegen den Trägerkranz (8) wirken.

8. Schweißzange nach einem der Ansprüche 1 bis 4,
**dadurch gekennzeichnet, dass** die Blockiermittel (20) als eine formschlüssig oder kraftformschlüssig rastend wirkende Sperreinrichtung ausgebildet sind.

9. Schweißzange nach Anspruch 8,
**dadurch gekennzeichnet, dass** die Sperreinrichtung mindestens ein Sperrelement (48) aufweist, das vorzugsweise an einem in dem Trägerkranz (8) drehbar gelagerten Drehträger (12) der Basiseinheit (2) gelagert ist und in dem Blockierzustand formschlüssig oder kraftformschlüssig mit jeweils einer von mehreren in Umfangsrichtung verteilt angeordneten, beispielsweise durch Löcher oder Vertiefungen gebildeten Blockierstellen (50) des Trägerkranzes (8) zusammenwirkt.

10. Schweißzange nach einem der Ansprüche 2 bis 9,
**dadurch gekennzeichnet, dass** der Blockierzustand durch Federkraft (F_{F}) und der Freigabezustand durch eine gegen die Federkraft (F_{F}) wirkende Betätigungskraft, insbesondere Druckmittelkraft (F_{P}), erreicht werden.

11. Schweißzange nach einem der Ansprüche 1 bis 4,
**dadurch gekennzeichnet, dass** die Blockiermittel (20) von insbesondere elektromotorischen Antriebsmitteln (54) derart gebildet sind, dass in einem aktivierten Zustand der Antriebsmittel (54) die Basiseinheit (2) motorisch relativ zu dem Trägerkranz (8) verdrehbar ist und die Antriebsmittel (54) in einem deaktivierten Zustand die relative Verdrehung blockieren.

12. Schweißzange nach Anspruch 11,
**dadurch gekennzeichnet, dass** dieAntriebsmittel(54)aus einem motorisch antreibbaren Zahnrad (56) und einer korrespondierenden Verzahnung (58) bestehen, wobei vorzugsweise ein das Zahnrad (56) aufweisender Antrieb in der Basiseinheit (2) befestigt ist und die Verzahnung (58) an dem Trägerkranz (8) angeordnet ist.
